# EUROPEAN PATENT APPLICATION

(11) **EP 1 316 877 A1**
(43) Date of publication of application: **04.06.2003**
(21) Application number: 02396166.7
(22) Date of filing: 08.11.2002
(51) Int. Cl.: G06F 1/16, H04M 1/247

(54) **A method for controlling the displaying of information in an electronic device**

(30) Priority: 14.11.2001 FI 20012209
(71) Applicant: Nokia Corporation, 02150 Espoo (FI)
(72) Inventor: Perälä, Timo, 36270 Kangasala (FI); Schrader, Martin, 33710 Tampere (FI)
(74) Representative: Pursiainen, Timo Pekka

(57) **Abstract**

The invention relates to a method for controlling the displaying of information in an electronic device (1) comprising means (2) for displaying visual information. In the method, the distance between the user and the electronic device (1) is measured, and the size of information to be displayed on the display (2) is changed when the distance between the user and the electronic device (1) is changed. The invention also relates to an electronic device (1) comprising means (2) for displaying visual information. The electronic device (1) also comprises means (13, 14) for measuring the distance between the user and the electronic device (1), and means (4, 7) for changing the size of displayed information when the distance between the user and the electronic device (1) is changed.

## Description

The present invention relates to a method for controlling the displaying of information in an electronic device comprising means for displaying visual information. The invention also relates to an electronic device comprising means for displaying visual information.

Electronic devices of various types are known, in which information is presented visually on a display or the like. This information is for example text-format information and/or image information. However, the size of the electronic device sets its own limits as to how large a display can be installed in the electronic device. For example, portable electronic devices, such as wireless stations, laptop PCs, palmtop PCs, or personal digital assistants (PDA), have a display of a relatively small size. Thus, the information to be displayed can be so small that the user may have difficulties in deciphering the information. On the other hand, in some electronic devices, it is possible to enlarge details, for example the font size, wherein the information on the display becomes more legible to the user. However, the enlargement of details reduces the quantity of information that can be displayed at a time, which may complicate the understanding of the information. This kind of a situation may occur, for example, when the user is writing a text message, of which only a small part is visible at a time. In this case, when the user wishes to check such a part of the text mesage which is not visible on the display, he/she must search for the correct text portion. In some situations, this may be relatively difficult and significantly slow down the writing of the text message.

In some cases, the user may have a need to view the information on the display when he/she is farther away from the electronic device. For example, when a call comes in a wireless station, the number of the calling telephone and/or the name data of the calling person are normally displayed on the display of the wireless station. If the user is not right next to the wireless station, he/she does not necessarily decipher who is calling. Thus, the user moves closer to check the number/name of the calling person and to decide whether to answer the call or not.

However, the user may find him/herself in such a place, *e*.*g*. on a ladder, that he/she does not have the time or does not want to check the caller until the call attempt is disconnected, *e.g.* when the calling person cuts off or the call is transferred to an answering service. In such a situation, the user must afterwards find out from the incoming call data who tried to reach him/her.

There are known wireless stations which apply means for measuring a distance. In this context, such means are primarily called proximity sensors, but such means are also known as distance sensors. The aim of such means is to determine whether the user is close to the electronic device. Thus, when a call comes in, it is determined whether there is a need to turn on the speaker function of the wireless station, if the user is father away from the phone but still within hearshot. The user can answer the call *e.g.* by waving his/her hand, wherein the call is switched on and the speaker function is activated, if necessary.

It is an aim of the present invention to provide a function for zooming information to be displayed, based on the proximity of the user, as well as an electronic device in which displayed information can be zoomed on the basis of the distance between the user and the electronic device. The invention is based on the idea of measuring the distance between the user and the electronic device, and this distance information is used in the zooming of information to be displayed. The user can determine parameters to affect *e.g.* whether the information is enlarged or reduced when the distance between the user and the electronic device is changed. More precisely, the method according to the present invention is primarily characterized in that the distance between the user and the electronic device is measured, and the size of information to be displayed is changed when the distance between the user and the electronic device is changed. The electronic device according to the invention is primarily characterized in that it also comprises means for measuring the distance between the user and the electronic device, and means for changing the size of displayed information when the distance between the user and the electronic device is changed.

The present invention shows remarkable advantages over solutions of prior art. When applying the method of the invention, the size of displayed information can be changed according to the need, wherein the legibility of the information can be significantly improved in comparison with solutions of prior art. Furthermore, the user has a possibility to set the parameters, according to which the change in the information size is determined, wherein the user can improve the usability of the electronic device according to his/her own preferences. The method according to the invention is useful *e.g.* for such persons who find it difficult to read a small font. Thus, the information size can be enlarged, if necessary, when the user is close to the electronic device. Also, sharp-sighted persons may utilize the property of zooming visual information according to the invention, for example by reducing the displayed information when the user is close to the electronic device. In this way, it is possible to increase the quantity of information displayed at a time. In a corresponding manner, when the user is farther away from the electronic device, the information size can be enlarged, and particularly sharp-sighted persons can still find the displayed information legible.

In the following, the invention will be described in more detail with reference to the appended drawings, in which
- Fig. 1: shows an electronic device according to a preferred embodiment of the invention in a reduced block chart,
- Fig. 2a: illustrates an example situation, in which the user is close to the electronic device,
- Fig. 2b: shows an example situation, in which the user is farther away from the electronic device than in the situation of Fig. 2a,
- Fig. 3a: shows an example of information to be displayed on the display of the electronic device,
- Fig. 3b,: shows the displayed information according to the example situation of Fig. 3a, when zoomed to a larger size,
- Fig. 4a: shows another example of information to be displayed on the display of the electronic device, and
- Fig. 4b: shows the information according to Fig. 4a when zoomed to a smaller size.

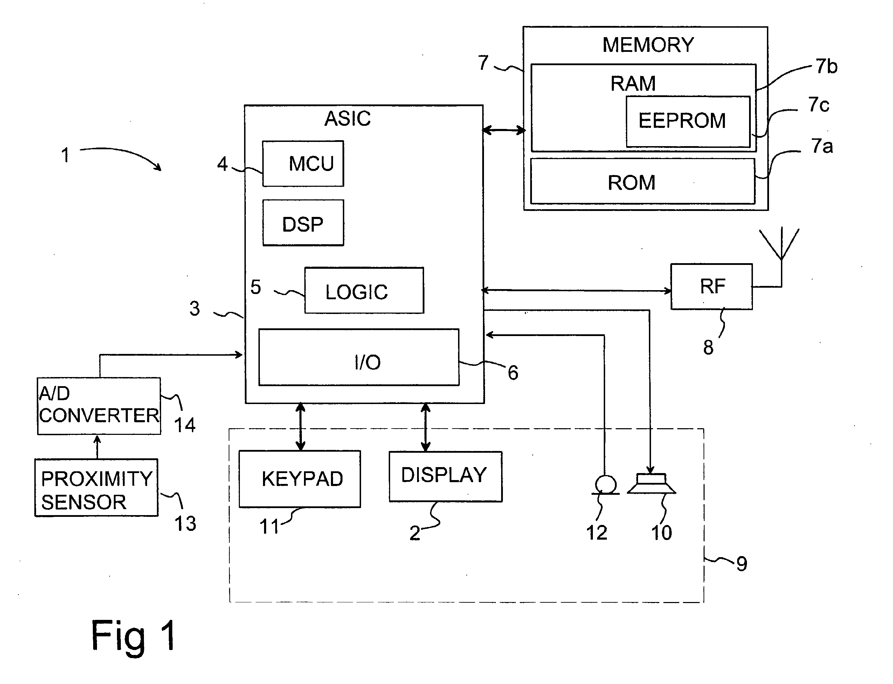

The following detailed description of the invention presents, as an example, an electronic device 1 as shown in Fig. 1, comprising means 2 for displaying visual information. For clarity, these means 2 will below be called a display. Typically, the display consists of picture elements (pixels), whose brightness can be changed to display the desired visual information. The display 2 can be a colour display or a monochrome display, but this feature is not significant as such for the present invention. The electronic device 1 also comprises a control block 3 with at least one processor 4, such as a microcontroller unit (MCU), and possibly also a digital signal processing unit (DSP). The control block also comprises logic functions 5 as well as access logic 6 (Input/Output, IO), *e.g.* for communication between other functional units and the processor 4. Furthermore, the electronic device 1 comprises a memory 7 which preferably contains at least a read only memory (ROM) 7a and a random access memory (RAM) 7b. The read only memory 7a can also be, either completely or in part, implemented by means of a non-volatile random-access memory, such as EEPROM or FLASH. The read only memory 7a is intended for the storage of *e.g.* control software, application software, permanent data and the like in the electronic device. The random access memory 7b can be used, for example, for the storage of changeable information required during the use of the electronic device 1. In this preferred embodiment, a part of the random access memory is implemented by using a non-volatile random access memory 7c, wherein it is possible to store in this memory, for example, information which does not need to be changed often, *e.g.* user profile data, telephone directory data, calendar data, *etc.* The user interface 9 of the wireless terminal 1 comprises means for presenting data, such as a display 2 and an earpiece/speaker 10, as well as means for entering data, such as one or more keypads 11 and a microphone 12. Furthermore, the electronic device comprises means 13, 14 for measuring a distance. These means 13, 14 for measuring a distance preferably comprise a proximity sensor 13 as well as measuring means 14 for measuring the signal of the proximity sensor 13. The measuring means 14 comprise, for example, an analog-to-digital converter or the like, whereby analog signal strength information is converted to digital format. Mobile station functions 8 comprise, for example, a transmitter and a receiver (not shown), by means of which the electronic device 1 can communicate with the mobile communication network in a way known as such. However, it should be mentioned that the present invention can also be applied in such electronic devices which do not comprise mobile station functions or other communication functions.

The electronic device 1 used can be an electronic device equipped with data processing functions, such as a personal computer (PC), a laptop PC, a palmtop PC, a personal digital assistant (PDA), a wireless station, such as a mobile station or a communication device, or the like. In the following, more detailed description of the invention, a non-restrictive example used of the electronic device 1 is a communication device which comprises not only data processing functions but also mobile station functions 8.

Proximity sensors are primarily based on the reflection of a signal transmitted by the proximity sensor from an object, such as the user. The proximity sensor measures the strength and/or propagation time of the reflected signal and, on the basis of this, forms an output signal proportional to the distance. In proximity sensors based on signal strength, the strength of the output signal is typically proportional to the distance. In proximity sensors based on measuring the propagation time, the output signal can directly indicate the propagation time, wherein, on the basis of it, it is possible to compute the distance, when the signal propagation rate in the medium (air) is known. The measuring signal of the proximity sensor is typically either an optical signal (laser/LED) or an audio signal (ultrasound). The measuring range is typically in the order of 0.3 m to 100 m for proximity sensors based on an optical signal and in the order of 0.05 m to 10 m for proximity sensors based on an audio signal. In view of applying the present invention, the type of the proximity sensor 13 used is not significant as such. More important criteria on selecting the proximity sensor 13 include *e.g.* weight, size, price, power consumption, reliability, failure probability, resistance to vibrations, and required operating voltages.

In the electronic device 1 according to a preferred embodiment of the invention, the distance is measured by measuring the strength of the signal formed by the proximity sensor 13 and determining, on the basis of this signal strength, the distance between the user and the electronic device 1. There are also known proximity sensors which form an output signal which directly indicates the distance between the user and the electronic device 1. In this case, the distance information is obtained directly from this signal. In the start-up procedure, for example, the strength of the signal of the proximity sensor 13 is measured without steps of comparing signal strengths.

The parameters related to the displaying of information can be set by the user, if necessary, or the original settings can be used. These settings are preferably stored in a non-volatile random access memory 7c, wherein previously stored parameters are available also later without a need to set them in connection with every start-up. These parameters can be set, for example, by enlarging the size of information to be displayed on the display 2 when the user moves farther away from the electronic device 1, or *vice versa.*

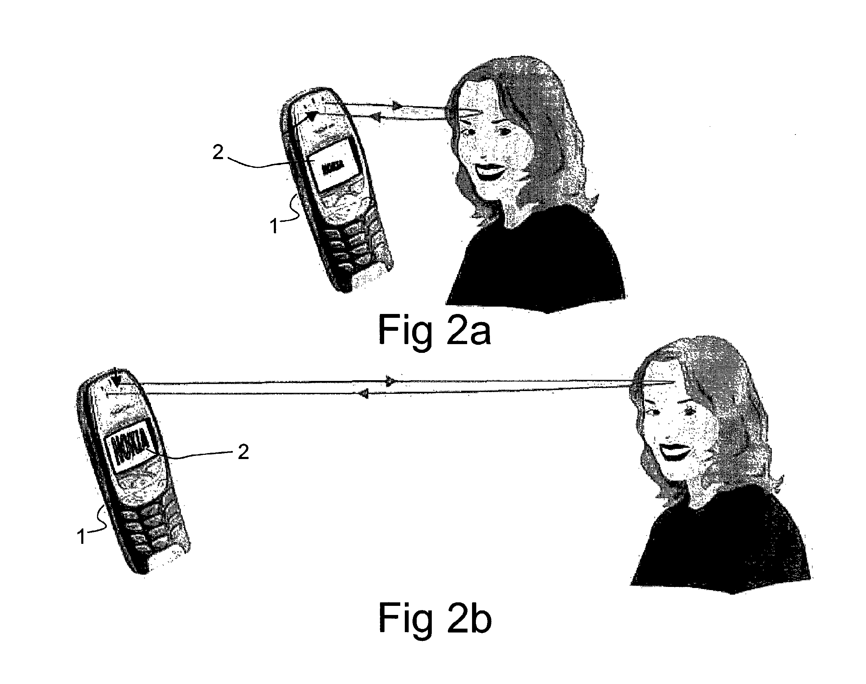

We shall next describe the example situation of Fig. 2a, in which the user of the electronic device is close to the electronic device 1. The user turns on the electronic device 1, wherein the running of the start-up program is started in the processor 4. In the start-up program, the strength of the signal formed by the proximity sensor 13 is determined by reading the measuring result of the measuring means 14. This measuring result is indicated by the measuring means 14 preferably in digital format, wherein it can be stored in the random access memory 7b. After the running of the start-up program, the use of the electronic device 1 can be started.

In the electronic device 1, distance measurements are taken at intervals and, if necessary, a new measuring result is stored in place of the outdated measuring result. The processor 4 compares the measuring result stored at the start-up stage, *i.e.* the signal strength of the proximity sensor, with the updated signal strength, and determines, on the basis of the comparison (signal strengths), how far away the user is from the electronic device. This distance information does not necessarily need to indicate the real distance but a relative distance. For example, a table is stored in the memory 7 of the electronic device, containing information about how the ratio between the signal strength at the start-up stage and the signal strength measured during the use is dependent on how far away the user is from the electronic device 1. If the proximity sensor 13 directly indicates this distance, this information can naturally be directly used.

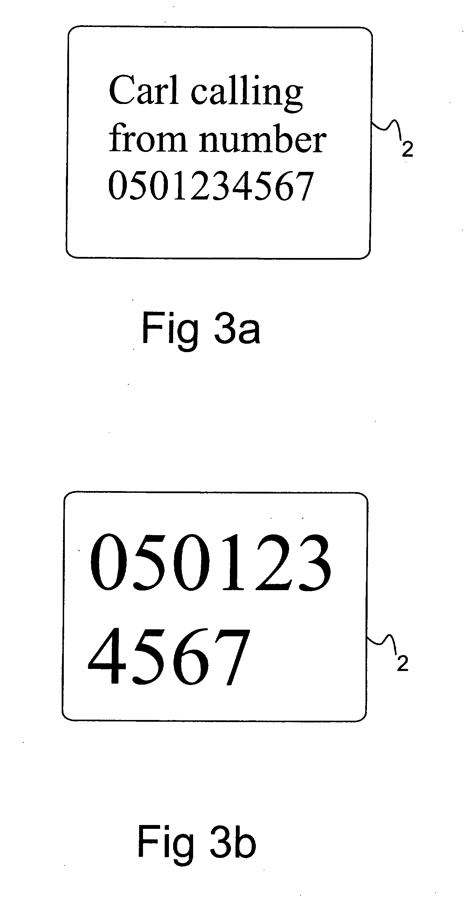

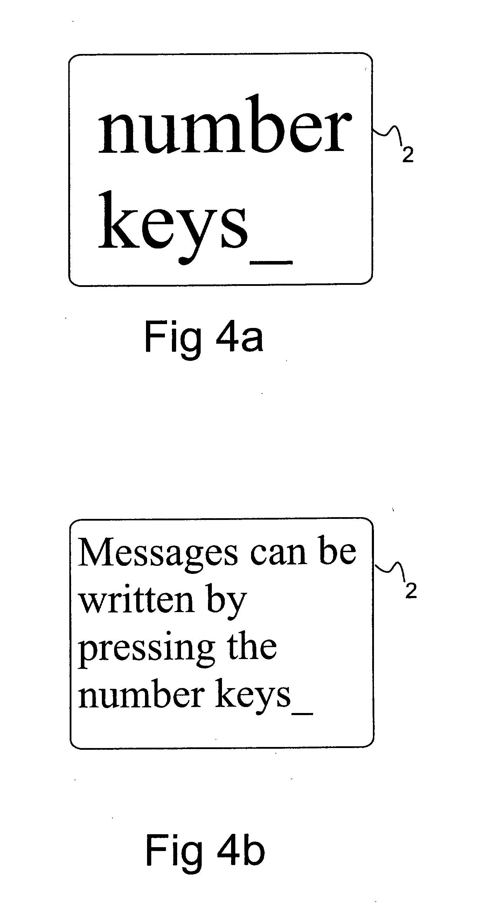

Let us assume that the user has set the parameters so that the size of information displayed on the display 2 is enlarged when the user moves farther away from the electronic device 1. Thus, after completion of the distance measuring result, it is examined if the distance has changed from the preceding measurement to such an extent that there is a need to change the size of information to be displayed on the display 2. If there is a need for change, the processor 4 preferably examines if the distance has decreased or increased. If the distance has increased *(e.g.,* the situation of Fig. 2b in comparison with Fig. 2a), the processor 4 changes the display parameters so that the information size is enlarged. This enlargement of the size may be proportional to the change in the distance, but also other principles can be applied. In some situations, the enlargement of the information size means that all the information cannot be displayed on the display 2 simultaneously, wherein a choice must be made, which part of the information is to be left out. This may vary in different situations. For example, when there is an incoming call, the display 2 preferably presents the information (name/phone number/image of calling person) which best fits in enlarged size on the display 2. An advantageous example of this is shown in Fig. 3b, in which a part of the information of Fig. 3a is displayed in enlarged form on the display 2. In a corresponding manner, when the distance is reduced, the information size can be reduced, wherein also a greater part of the information to be displayed will fit simultaneously on the display 2. When the user writes *e.g.* a text message or makes a call, the distance is relatively small, wherein in this alternative, the information can be displayed in a relatively small font size. Thus, the user will see a large part of the text message simultaneously. Another example of such situations is shown in Fig. 4a, in which information is enlarged, and Fig. 4b shows the information of Fig. 4a zoomed to a smaller font size.

In such a case in which the user has set the display parameters so that the information size is enlarged when the distance is reduced, the steps to be taken are largely similar to those presented above, except that the change in the font size is substantially reverse. After the completion of a new measuring result, the processor 4 compares the signal strength of the start-up stage with the most recent measuring result and, on the basis of this comparison, determines whether the distance has been changed. If the distance has been reduced, the information size is increased, and, in a corresponding manner, if the distance has been increased, the information size is reduced. This kind of an operation is useful particularly for weak-sighted persons, because the information size is relatively large when the user is close to the electronic device. In a corresponding manner, when the user is farther away from the electronic device, it is of less significance, what is displayed, wherein the information can be displayed in a relatively small font size. This is also useful for such a person who is far-sighted rather than short-sighted. Also a far-sighted person finds information with a large font size more legible at a close distance. In a corresponding manner, as the information size is reduced when the distance is slightly increased, the user's far-sightedness makes it possible for the user to still find the information with a smaller font size legible.

Due to the above-mentioned short- or far-sightedness, the changes in the font size of displayed information can also be made in such a way that the direction of the change is not the same when the change in the distance is made in the same direction. For example, for a short-sighted user, a small font size can be used at closer distances and the font size can be increased when the distance is slightly increased. When the distance is further increased so long that the displayed information is not legible even in the large font size, the information size can be reduced again.

It has been presented above that the processor compares the new measuring result with the measuring result stored at the start-up stage and thereby determines the distance. In some situations, it is also possible to compare the new measuring result with an earlier *(e.g.* preceding) measuring result during the use and to use this comparison data in determining the need to change the information font size.

The change in the distance does not necessarily always cause a change in the information size. For example, in a situation in which the distance is changed only slightly, it is not always sensible to change the information size on the display 2 but first at the stage when the distance has been sufficiently changed. By means of the hysteresis produced in this way, too frequent changes are avoided and unnecessary loading of the processor 4 is reduced.

It is also possible to perform the distance measurement and change the information size by a certain command. Therefore, the user gives the command by *e.g.* uttering a voice command or by pressing a key of the keypad 11 when he/she wishes the distance measurement and possible changes on the information size to be performed. This kind of arrangement can be used *e.g.* for avoiding irritations and unintentional rescaling caused, for example, by other people passing by.

The functions according to the invention can be largely implemented in the application software of the processor 4. In the storage of some permanent setting values, it is possible to use the read only memory 7a and/or the non-volatile random access memory, which is known as such. Such setting values include, for example, tables which are used in the measuring of the distance, *etc.*

It is obvious that the present invention is not limited solely to the above-presented embodiments, but it can be modified within the scope of the appended claims.

## Claims

1. A method for controlling the displaying of information in an electronic device (1) comprising means (2) for displaying visual information, **characterized in that** the distance between the user and the electronic device (1) is measured, and the size of information to be displayed on the display (2) is changed when the distance between the user and the electronic device (1) is changed.

2. The method according to claim 1, **characterized in that** the first distance measurement is taken in connection with turning on of the electronic device (1), at least a second distance measurement is taken during the use of the electronic device (1), and that the change in the distance is determined from the ratio between the first distance measurement and said at least one second distance measurement.

3. The method according to claim 1 or 2, **characterized in that** the measurement of the distance is based on measuring a change in signal strength.

4. The method according to claim 1 or 2, **characterized in that** the measurement of the distance is based on measuring a signal propagation time.

5. The method according to claim 1, 2, 3, or 4, **characterized in that** the size of information to be displayed on the display (2) is enlarged when the distance between the user and the electronic device (1) is increased.

6. The method according to claim 1, 2, 3, or 4, **characterized in that** the size of information to be displayed on the display (2) is reduced when the distance between the user and the electronic device (1) is increased.

7. An electronic device (1) comprising means (2) for displaying visual information, **characterized in that** it also comprises means (13, 14) for measuring the distance between the user and the electronic device (1), and means (4, 7) for changing the size of displayed information when the distance between the user and the electronic device (1) is changed.

8. The electronic device (1) according to claim 7, **characterized in that** the means (13, 14) for measuring the distance of the user comprise a proximity sensor (13).

9. The electronic device (1) according to claim 7 or 8, **characterized in that** it comprises means (4, 13, 14) for taking the first distance measurement in connection with turning on of the electronic device (1), means for taking at least one second distance measurement during the use of the electronic device (1), and means (4, 7) for determining a change in the distance from the ratio between the first distance measurement and said at least one second distance measurement.

10. The electronic device (1) according to claim 7, 8 or 9, **characterized in that** it comprises means (4) for enlarging the size of information to be displayed on the display (2) when the distance between the user and the electronic device (1) is increased.

11. The electronic device (1) according to claim 7, 8 or 9, **characterized in that** it comprises means (4) for reducing the size of information to be displayed on the display (2) when the distance between the user and the electronic device (1) is increased.

12. The electronic device (1) according to any of the claims 7 to 11, **characterized in that** it comprises means (11, 12) for setting a correlation between the direction of change in the distance and the direction of change in the size of information to be displayed on the display (2).

13. The electronic device (1) according to any of the claims 7 to 12, **characterized in that** it is a wireless station.
